(19)

Europäisches
Patentamt
European
Patent Office
Office européen
des brevets

(11) **EP 4 503 427 A1**

(12) **EUROPEAN PATENT APPLICATION**
published in accordance with Art. 153(4) EPC

(43) Date of publication:
**05.02.2025 Bulletin 2025/06**

(21) Application number: **22935791.8**

(22) Date of filing: **28.12.2022**

(51) International Patent Classification (IPC):
**H02P 21/05** (2006.01)   **B60L 9/18** (2006.01)
**H02M 7/48** (2007.01)

(52) Cooperative Patent Classification (CPC):
**B60L 9/18; H02M 7/48; H02P 21/05**

(86) International application number:
**PCT/JP2022/048660**

(87) International publication number:
**WO 2023/188667 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022  JP 2022057266**

(71) Applicant: **Hitachi, Ltd.
Tokyo 100-8280 (JP)**

(72) Inventors:
• **NAKAYAMA, Hiro
Tokyo 100-8280 (JP)**
• **KOJIMA, Tetsuo
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **VEHICULAR DRIVING CONTROL DEVICE AND METHOD THEREFOR**

(57) A vehicular driving control device comprises: an electric power conversion circuit that is connected to a DC power source and that supplies electric power of the DC power source to an electric motor in accordance with a voltage command; a filter circuit configured to be interposed between the DC power source and the DC side of the electric power conversion circuit and to have a reactor and a capacitor; a variation detection unit for detecting a varying component of the electrical quantity regarding the filter circuit; a torque control unit for generating the voltage command applied to the electric motor in accordance with a torque command or a current command; and a damping control unit for operating the electric power conversion circuit so as to suppress the varying component. The damping control unit operates the electric power conversion circuit in accordance with a damping operation amount based on a first operation amount calculated in accordance with the torque command or the current command and the varying component and a second operation amount calculated in accordance with the varying component and rotation rate information relating to the electric motor. Accordingly, it is possible to provide a vehicular driving control device that performs damping control at a fixed attenuation, regardless of the voltage of DC wires or operating point of the electric motor, with respect to oscillation of capacitor voltage.

FIG. 1

## Description

Technical Field

The present invention relates to a vehicular driving control device and a method therefor.

Background Art

A technique for controlling the output torque of an electric motor is widely used in the industry. Also in an electric railway, a configuration in which torque control of an electric motor is performed by an inverter device using a DC overhead line as a power source is widely used.

A DC railway vehicle (hereinafter, also referred to as a "vehicle") is generally provided with a filter circuit including a reactor and a capacitor in order to prevent an adverse effect that a harmonic current flows out from a DC side of the inverter device. However, it is known that the combination of the filter circuit and the inverter device causes an unstable resonance system, which causes the control of the electric motor to become unstable due to an oscillation phenomenon in which the capacitor voltage oscillates.

The control for suppressing this oscillation phenomenon is the damping control, which is essential for the stable operation of the DC electric train. In addition, appropriately damping the oscillation of the capacitor voltage by the damping control is important for reducing the inductive obstacle due to the return current.

PTL 1 shows a technique of calculating a variation rate of a capacitor voltage, operating a current command or a torque command of a vector control unit with a damping manipulated variable corresponding to the variation rate thereof, and with respect to the variation of the capacitor voltage, controlling a current of an inverter in a direction of suppressing the variation.

Citation List

Patent Literature

PTL 1: WO 2008/026249

Summary of Invention

Technical Problem

However, the damping control of PTL 1 has a problem in which the damping with respect to the variation of the capacitor voltage becomes strong when the torque command is large, and the damping becomes weak when the torque command is small. The present invention has been made in view of the above problems, and an object of the present invention is to provide a vehicular driving control device capable of performing damping control to apply constant damping to the oscillation of a capacitor voltage regardless of a voltage of a DC overhead line or an operating point of an electric motor.

Solution to Problem

The present invention to solve the above problem is a vehicular driving control device including: an electric power conversion circuit connected to a DC power source, the electric power conversion circuit being configured to supply electric power of the DC power source to an electric motor according to a voltage command; a filter circuit interposed between a DC side of the electric power conversion circuit and the DC power source, the filter circuit including a reactor and a capacitor; a variation detection unit configured to detect a variable component of an electrical quantity related to the filter circuit; a torque control unit configured to generate the voltage command to be applied to the electric motor according to a torque command or a current command; and a damping control unit configured to operate the electric power conversion circuit to suppress the variable component. The damping control unit operates the electric power conversion circuit according to a damping manipulated variable based on: a first manipulated variable calculated according to the torque command or the current command and the variable component, and a second manipulated variable calculated according to rotational speed information of the electric motor and the variable component.

Advantageous Effects of Invention

According to the present invention, it is possible to provide a vehicular driving control device capable of performing damping control to provide constant damping to oscillation of a capacitor voltage regardless of a voltage of a DC overhead line or an operating point of an electric motor.

Brief Description of Drawings

[FIG. 1] FIG. 1 is a functional block diagram schematically showing a vehicular driving control device (hereinafter, referred to as "the present device") 10A according to a first embodiment of the present invention.

[FIG. 2] FIG. 2 is a detailed control circuit diagram of a damping control unit 11 in FIG. 1.

[FIG. 3] FIG. 3 is a functional block diagram showing a vehicular driving control device (this is also referred to as "the present device") 10B according to a second embodiment of the present invention.

[FIG. 4] FIG. 4 is a detailed control circuit diagram of a damping control unit 111 in FIG. 3.

[FIG. 5] FIG. 5 is a functional block diagram schematically showing a vehicular driving control device (this is also referred to as "the present device") 10C according to a third embodiment of the present invention.

[FIG. 6] FIG. 6 is a detailed control circuit diagram of a damping control unit 211 in FIG. 5.

[FIG. 7] FIG. 7 is a schematic circuit diagram of a variation detection unit 330 according to a fourth embodiment of the present invention.

[FIG. 8] FIG. 8 is a schematic circuit diagram of a variation detection unit 430 according to a fifth embodiment of the present invention.

[FIG. 9] FIG. 9 is a diagram showing only a part different from that of the first embodiment in a vehicular driving control device (this is also referred to as "the present device") 10F according to a sixth embodiment of the present invention.

Description of Embodiments

First Embodiment

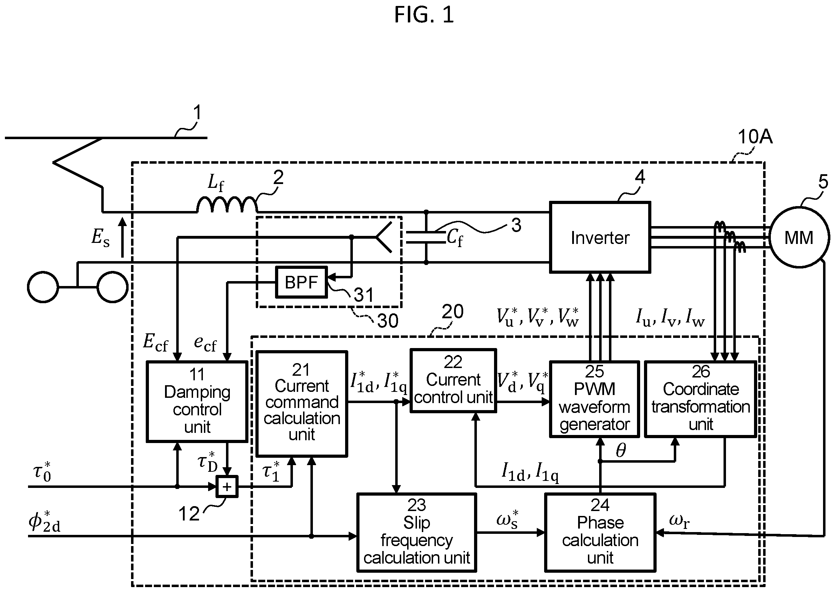

FIG. 1 is a functional block diagram schematically showing the present device 10A according to a first embodiment. The present device 10A supplies electric power captured from the DC overhead line 1 to the induction motor 5. The present device 10A mainly includes an inverter 4, a filter circuit including a reactor 2 and a capacitor 3, a damping control unit 11, a vector control unit 20, and a variation detection unit 30.

It should be noted that, in addition to the present device 10A of the first embodiment, the features of the respective present devices 10B to 10F of the second to sixth embodiments will be described below, but when there is no need to distinguish, they are collectively referred to as the present device 10. The reactor 2 is connected in series between the DC overhead line 1 and the DC side of the inverter 4 and the capacitor 3 is connected in parallel to the DC side of the inverter 4, which prevents an adverse effect that a harmonic current generated on the DC side of the inverter 4 flows out to the DC overhead line 1.

In the present device 10A of the first embodiment, a case where the inverter 4 is combined with the induction motor 5 will be described, but a synchronous motor may be used after the configuration of the vector control unit is appropriately changed. In addition, torque control obtained by combining a chopper circuit with a DC electric motor may be performed. Furthermore, when the torque and the rotational speed in the following description are replaced with the thrust and the speed, the present invention is useful even when a linear motor is used.

The inverter 4 is a circuit that converts a DC voltage into a three-phase AC voltage having any frequency and any amplitude, and can perform both a power running operation of supplying electric power from the DC side to the AC side induction motor 5 and a regenerative operation of supplying electric power from the AC side induction motor 5 to the DC side.

The variation detection unit 30 mainly includes a band-pass filter (BPF) 31 that extracts a variable component $e_{cf}$ of the capacitor voltage $E_{cf}$. Phase lead compensation may be added to the characteristics of the band-pass filter 31 in consideration of an operation delay of the vector control unit 20.

In addition, another filter such as a high-pass filter may be used instead of the band-pass filter, or when there is a known disturbance at a specific frequency, a characteristic of selectively blocking a component of the frequency may be used.

The damping control unit 11 generates a damping manipulated variable $\tau_D{}^*$ for suppressing the oscillation of the voltage $E_{cf}$ of the capacitor 3. The adder 12 adds the damping manipulated variable $\tau_D{}^*$ output from the damping control unit to the torque command $\tau_0{}^*$ received by the present device 10 from the host control system (not shown) in order to generate the driving force necessary for accelerating/decelerating the vehicle, and calculates a torque command $\tau_1{}^*$ provided to the vector control unit 20.

The vector control unit 20 operates the inverter 4 so that the torque $\tau$ output from the induction motor 5 matches

the torque command $\tau_1^*$. As well-known as vector control, the vector control unit 20 performs control calculations in a rotating coordinate system including a d-axis in a direction matching the rotor interlinkage magnetic flux of the induction motor 5 and a q-axis orthogonal to the d-axis.

The d-axis magnetic flux command $\varphi^*_{2d}$ received from the host control system (not shown), the torque command $\tau^*_1$, the three-phase currents $I_U$, $I_V$, and $I_W$ flowing through the induction motor 5, and the rotational speed $\omega_r$ of the induction motor 5 are input to the vector control unit 20, and the vector control unit 20 outputs three-phase voltage commands $V^*_U$, $V^*_V$, and $V^*_W$ obtained by calculating these to operate the inverter 4. The vector control unit 20 in FIG. 1 may be considered to include a torque control unit (not shown).

The torque control unit generates voltage commands $V^*_U$, $V^*_V$, and $V^*_W$ to be applied to the electric motor 5 according to the torque commands $\tau_0^*$ and $\tau_1^*$ or the current commands $I^*_{1d}$ and $I^{**}_{1q}$. The torque control unit only needs to be a vector control system that generates the voltage commands $V^*_U$, $V^*_V$, and $V^*_W$ so that the output torque $\tau$ of the electric motor 5 or the current flowing through the electric motor 5 matches the torque commands $\tau_0^*$ and $\tau_1^*$ or the current commands $I'_{1d}$ and $I^{**}_{1q}$.

The vector control unit 20 includes a current command calculation unit 21, a current control unit 22, a slip frequency calculation unit 23, a PWM waveform generator 25, a phase calculation unit 24, and a coordinate transformation unit 26.

In the vector control unit 20 of the first embodiment, a case where the rotational speed $\omega_r$ of the induction motor 5 is input thereto will be described, but the present invention is not limited thereto. The vector control unit 20 may perform control using a value obtained by estimating the rotational speed $\omega_r$ of the induction motor 5 based on various pieces of information inside the vector control unit 20 such as the three-phase current flowing through the induction motor 5 and the terminal voltage of the induction motor 5.

Hereinafter, the configuration of the vector control unit 20 will be described. The current command calculation unit 21 generates a d-axis current command $I^*_{1d}$ and a q-axis current command $I^*_{1q}$ according to the following formulas (1) and (2) from a d-axis magnetic flux command $\varphi^*_{2d}$ and a torque command $\tau^*_1$ received from a host control system (not shown). Where let s be a Laplace operator, let $L_2$ be a rotor self-inductance of the induction motor 5, let $R_2$ be a rotor resistance of the induction motor 5, let M be a mutual inductance of the induction motor 5, and let $N_p$ be the number of pole pairs of the induction motor 5.

[Mathematical 1]

$$I_{1d}^* = \left(1 + s\frac{L_2}{R_2}\right)\frac{\phi_{2d}^*}{M} \qquad\qquad \cdots\cdots(1)$$

$$I_{1q}^* = \frac{\tau_1^*}{N_p\phi_{2d}^*}\frac{L_2}{M} \qquad\qquad \cdots\cdots(2)$$

The current control unit 22 generates a d-axis voltage command $V_d^*$ and a q-axis voltage command $V_q^*$ according to the following formulas (4) and (5) so that the d-axis current $I_{1d}$ and the q-axis current $I_{1q}$ respectively match the d-axis current command $I^*_{1d}$ and the q-axis current command $I^*_{1q}$.

Where let $L_1$ be the stator self-inductance of the induction motor 5, let $R_1$ be the stator resistance of the induction motor 5, let $\omega_{inv}$ be the angular velocity of the three-phase AC voltage output from the inverter 4, and let $\omega_{acr}$ be the response angular frequency of the current control unit 22. In addition, $\sigma$ is a leakage coefficient obtained by the following formula (3) from the circuit constant of the induction motor 56.

[Mathematical 2]

$$\sigma = 1 - \left(\frac{M^2}{L_1 L_2}\right) \qquad \cdots\cdots(3)$$

$$V_d^* = \left(\omega_{acr}\sigma L_1 + \frac{\omega_{acr}R_1}{s}\right)(I_{1d}^* - I_{1d}) - \omega_{inv}\sigma L_1 I_{1q}^* \qquad \cdots\cdots(4)$$

$$V_q^* = \left(\omega_{acr}\sigma L_1 + \frac{\omega_{acr}R_1}{s}\right)(I_{1q}^* - I_{1q}) + \omega_{inv}\sigma L_1 I_{1d}^* + \omega_{inv}\frac{M}{L_2}\phi_{2d}^* \qquad \cdots\cdots(5)$$

In order to match the direction of the d-axis with the direction of the rotor interlinkage magnetic flux of the induction motor 5, the slip frequency calculation unit 23 estimates a slip frequency that is a difference between the rotation angular velocity of the rotor interlinkage magnetic flux of the induction motor 5 and the angular velocity $\omega_{inv}$ of the three-phase AC voltage, and outputs the slip frequency to the phase calculation unit 24. The slip frequency calculation unit 23 calculates a slip frequency estimated value $\omega_s^*$ according to the following formula (6) from the d-axis magnetic flux command $\varphi_{2d}^*$, the q-axis current command $I_{1q}^*$, and the circuit constant of the induction motor 5.
[Mathematical 3]

$$\omega_s^* = \frac{R_2 M I_{1q}^*}{L_2 \phi_{2d}^*} \qquad \cdots\cdots(6)$$

The phase calculation unit 24 calculates a phase angle $\theta$ of the three-phase AC voltage output from the inverter 4. The phase calculation unit 24 calculates the phase angle $\theta$ of the three-phase AC voltage according to the following formula (7) from the rotational speed $\omega_r$ of the induction motor 5 and the slip frequency estimated value $\omega_s^*$.
[Mathematical 4]

$$\theta = \int (\omega_s^* + \omega_r)dt \qquad \cdots\cdots(7)$$

The PWM waveform generator 25 outputs three-phase switching signals $V_U^*$, $V_V^*$, and $V_W^*$ according to the phase angle $\theta$ of the three-phase AC voltage output from the inverter 4, the d-axis voltage command $V_d^*$, and the q-axis voltage command $V_q^*$, and operates the inverter 4. The coordinate transformation unit 26 transforms the three-phase currents $I_U$, $I_V$, and $I_W$ flowing through the induction motor 5 into a d-axis current $I_{1d}$ and a q-axis current $I_{1q}$ in the rotating coordinate system by the following formula (8). Such an operation of the vector control unit 20 is a widely known technique as indirect vector control.
[Mathematical 5]

$$\begin{pmatrix} I_{1d} \\ I_{1q} \end{pmatrix} = \frac{\sqrt{2}}{3} \begin{pmatrix} \cos\theta & \cos\left(\theta + \frac{2\pi}{3}\right) & \cos\left(\theta - \frac{2\pi}{3}\right) \\ \sin\theta & \sin\left(\theta + \frac{2\pi}{3}\right) & \sin\left(\theta - \frac{2\pi}{3}\right) \end{pmatrix} \begin{pmatrix} I_u \\ I_v \\ I_w \end{pmatrix} \qquad \cdots\cdots(8)$$

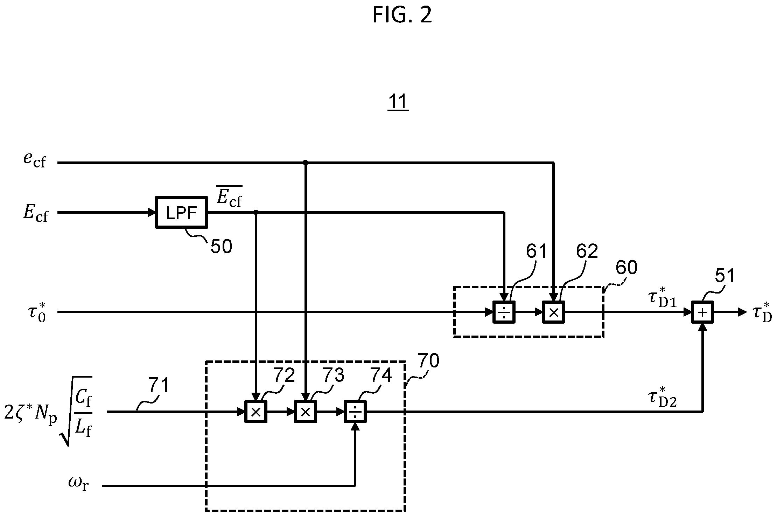

FIG. 2 is a detailed control circuit diagram of the damping control unit 11 in FIG. 1. The damping control unit 11 mainly includes a low-pass filter (LPF) 50 that extracts a DC component (with overline) $E_{cf}$ of the capacitor voltage $E_{cf}$, an adder 51, a first manipulated variable calculation unit 60, and a second manipulated variable calculation unit 70. The first manipulated variable calculation unit 60 includes a divider 61 and a multiplier 62.

The first manipulated variable calculation unit 60 calculates a value obtained by multiplying the torque command $\tau_0^*$ by the variable component $e_{cf}$ of the capacitor voltage $E_{cf}$ and dividing the result by the DC component (with overline) $E_{cf}$ of the capacitor voltage $E_{cf}$. This value is the first manipulated variable $\tau_{D1}^*$. The second manipulated variable calculation unit 70 calculates a value obtained by multiplying the DC component (with overline) $E_{cf}$ of the capacitor voltage $E_{cf}$, the variable component $e_{cf}$ of the capacitor voltage $E_{cf}$, and the proportional constant 71 and dividing the product by the rotational speed $\omega r$ of the induction motor 5. This value is the second manipulated variable $\tau_{D2}^*$.

The first manipulated variable $\tau^*_{D1}$ and the second manipulated variable $\tau^*_{D2}$ are added by the adder 51 to calculate the damping manipulated variable $\tau^*_D$. The proportional constant 71 multiplied in the second manipulated variable calculation unit 70 may be a constant value at all times or may be a variable value in consideration of an operation delay of the inverter 4 or the vector control unit 20.

In addition, the second manipulated variable calculation unit 70 may switch the value of the proportional constant 71 depending on whether the inverter 4 performs the power running operation or the regenerative operation. In addition, the damping control unit 11 may use at least any one of the first manipulated variable $\tau^*_{D1}$ and the second manipulated variable $\tau^*_{D2}$ in a state of being disabled or both in an enabled state.

When the DC voltage is known, the present device 10A can use the DC voltage as the DC component (with overline) $E_{cf}$ of the capacitor voltage $E_{cf}$. Specific examples of this case include a case where the present device 10A receives DC electric power from a power conversion apparatus that performs voltage constant control instead of the DC overhead line 1.

Before the description of the effect of the first embodiment, the principle of occurrence of the oscillation phenomenon of the capacitor voltage $E_{cf}$ and the theoretical basis of the oscillation suppression by the configuration of the first embodiment will be described. The resonance frequency of the filter circuit including the reactor 2 and the capacitor 3 to be subjected to the damping control is usually 10 Hz to 20 Hz, and thus the period thereof is about 50 to 100 ms.

The speed of the vehicle does not change abruptly during such degree of time as the resonance period of the filter circuit. In addition, during the same degree of time, the torque command $\tau^*_0$ received from the host control system does not change abruptly either. Therefore, hereinafter, for convenience of description, the rotational speed $\omega_r$ of the induction motor 5 and the torque command $\tau^*_0$ can be treated as constant.

Here, when the torque command $\tau^*_0$ and the torque command $\tau^*_1$ are equal without performing damping control at all, and furthermore, the output torque $\tau$ of the induction motor 5 matches the torque command $\tau^*_1$ by vector control, let the number of pole pairs of the induction motor 5 be $N_p$, the mechanical output $\omega_r\tau/N_p$ of the induction motor 5 is also constant. Ignoring losses inside the present device 10A and the induction motor 5, the electric power $P_{inv}$ drawn from the DC side by the inverter 4 is equal to the mechanical output $\omega_r\tau/N_p$ of the induction motor 5, and thus this is also constant, and the following formula (9) holds.

[Mathematical 6]

$$P_{inv} = \frac{\omega_r \tau}{N_p} = \text{const.} \qquad \cdots\cdots(9)$$

Let the current drawn from the DC side by the inverter 4 be $I_{inv}$, the following formula (10) holds.

[Mathematical 7]

$$P_{inv} = E_{cf} I_{inv} \qquad \cdots\cdots(10)$$

When the ratio of the variable component $i_{inv}$ of $I_{inv}$ to the variable component $e_{cf}$ of the capacitor voltage $E_{cf}$ is obtained based on the above formulas (9) and (10), the following formula (11) is obtained. However, the DC component of the current drawn from the DC side by the inverter 4 was defined as (with overline) $I_{inv}$.

[Mathematical 8]

$$\frac{i_{inv}}{e_{cf}} = \frac{\partial I_{inv}}{\partial E_{cf}} = \frac{\partial}{\partial E_{cf}}\left(\frac{P_{inv}}{E_{cf}}\right) = -\frac{P_{inv}}{(\overline{E_{cf}})^2} = -\frac{\overline{I_{inv}}}{\overline{E_{cf}}} \qquad \cdots\cdots(11)$$

Here, when a closed-loop transfer function from the variable component $e_s$ of the voltage of the DC overhead line 1 to the variable component $e_{cf}$ of the capacitor voltage $E_{cf}$ is obtained, a transfer function of a secondary system as in the following formula (12) is obtained.

[Mathematical 9]

$$\frac{e_{cf}}{e_s} = \frac{\frac{1}{L_f C_f}}{s^2 + s\frac{1}{C_f}\frac{i_{inv}}{e_{cf}} + \frac{1}{L_f C_f}} = \frac{\frac{1}{L_f C_f}}{s^2 + s\frac{1}{C_f}\left(-\frac{\overline{I_{inv}}}{\overline{E_{cf}}}\right) + \frac{1}{L_f C_f}} \qquad \cdots\cdots(12)$$

When this is rewritten using the resonance angular frequency $\omega_n$ and the damping coefficient $\zeta$ of the filter circuit, the following formula (13) is obtained.

[Mathematical 10]

$$\frac{e_{\mathrm{cf}}}{e_{\mathrm{s}}} = \frac{\omega_{\mathrm{n}}^2}{s^2 + 2\zeta\omega_{\mathrm{n}}s + \omega_{\mathrm{n}}^2} \qquad \cdots\cdots(13)$$

By comparing the first-order coefficient of s among the denominators of the above formulas (12) and (13), the following is obtained.

[Mathematical 11]

$$\zeta = \frac{i_{\mathrm{inv}}}{e_{\mathrm{cf}}}\frac{1}{2}\sqrt{\frac{L_{\mathrm{f}}}{C_{\mathrm{f}}}} = -\frac{\overline{I_{\mathrm{inv}}}}{\overline{E_{\mathrm{cf}}}}\frac{1}{2}\sqrt{\frac{L_{\mathrm{f}}}{C_{\mathrm{f}}}} \qquad \cdots\cdots(14)$$

It is generally known that the oscillation phenomenon of the secondary system decays when the damping coefficient $\zeta$ is positive, remains sustained when the damping coefficient $\zeta$ is 0, and expands when the damping coefficient $\zeta$ is negative. Therefore, when the induction motor 5 performs the power running operation and the (with overline) $I_{\mathrm{inv}}$ becomes positive, the damping coefficient $\zeta$ becomes negative, and the oscillation of the capacitor voltage $E_{\mathrm{cf}}$ expands with time, leading to unstable control.

To prevent this phenomenon, control such that $i_{\mathrm{inv}}/e_{\mathrm{cf}}$ becomes positive only needs to be implemented, and the damping coefficient $\zeta$ only needs to be set to a positive value. That is, damping control only needs to be performed in which the torque command $\tau^*_1$ is operated according to the variable component $e_{\mathrm{cf}}$ of the capacitor voltage $E_{\mathrm{cf}}$, the mechanical output $\omega_{\mathrm{r}}\tau/N_{\mathrm{p}}$ of the induction motor 5 is varied, and the electric power $P_{\mathrm{inv}}$ drawn from the DC side by the inverter 4 is varied.

Based on the above, what damping control is necessary is derived in order to make the damping coefficient $\zeta$ of the oscillation of the capacitor voltage $E_{\mathrm{cf}}$ coincide with a desired positive value $\zeta^*$, and the theoretical basis of the oscillation suppression according to the first embodiment is shown.

Let a variation amount of the output torque $\tau$ of the induction motor 5 by the damping control be $\tau_{\mathrm{D}}$, and it is assumed that the variation amount is in a proportional relationship with the variable component $e_{\mathrm{cf}}$ of the capacitor voltage $E_{\mathrm{cf}}$. Let this proportional constant be $K_{\mathrm{D}}$, and the following formula (15) holds.

[Mathematical 12]

$$\tau_{\mathrm{D}} = K_{\mathrm{D}}e_{\mathrm{cf}} \qquad \cdots\cdots(15)$$

After ignoring the loss inside the present device 10 and the induction motor 5, when the component $p_{\mathrm{invD}}$ that varies by the damping control in the electric power $P_{\mathrm{inv}}$ drawn from the DC side by the inverter 4 is obtained, the following formula (16) is obtained. Using this, when the ratio of the variable component $i_{\mathrm{inv}}$ of $I_{\mathrm{inv}}$ to the variable component $e_{\mathrm{cf}}$ of $E_{\mathrm{cf}}$ is obtained, the following formula (17) is obtained.

[Mathematical 13]

$$p_{\mathrm{invD}} = \frac{\omega_{\mathrm{r}}}{N_{\mathrm{p}}}\tau_{\mathrm{D}} = \frac{\omega_{\mathrm{r}}}{N_{\mathrm{p}}}K_{\mathrm{D}}e_{\mathrm{cf}} \qquad \cdots\cdots(16)$$

$$\frac{i_{\mathrm{inv}}}{e_{\mathrm{cf}}} = \frac{\partial I_{\mathrm{inv}}}{\partial E_{\mathrm{cf}}} = \frac{\partial}{\partial E_{\mathrm{cf}}}\left(\frac{P_{\mathrm{inv}}}{E_{\mathrm{cf}}}\right) = -\frac{\overline{I_{\mathrm{inv}}}}{\overline{E_{\mathrm{cf}}}} + \frac{\partial}{\partial E_{\mathrm{cf}}}\left(\frac{p_{\mathrm{invD}}}{E_{\mathrm{cf}}}\right) \approx -\frac{\overline{I_{\mathrm{inv}}}}{\overline{E_{\mathrm{cf}}}} + \frac{\partial}{\partial E_{\mathrm{cf}}}\left(\frac{p_{\mathrm{invD}}}{\overline{E_{\mathrm{cf}}}}\right) = -\frac{\overline{I_{\mathrm{inv}}}}{\overline{E_{\mathrm{cf}}}} + \frac{\omega_{\mathrm{r}}}{N_{\mathrm{p}}\overline{E_{\mathrm{cf}}}}K_{\mathrm{D}} \quad \cdots(17)$$

Using the above formula (17), when a closed-loop transfer function from the variable component $e_{\mathrm{s}}$ of the voltage of the DC overhead line 1 to the variable component $e_{\mathrm{cf}}$ of the capacitor voltage $E_{\mathrm{cf}}$ is obtained, a transfer function of a secondary system as the following formula (18) is obtained.

[Mathematical 14]

$$\frac{e_{\text{cf}}}{e_{\text{s}}} = \frac{\frac{1}{L_f C_f}}{s^2 + s\frac{1}{C_f}\frac{i_{\text{inv}}}{e_{\text{cf}}} + \frac{1}{L_f C_f}} = \frac{\frac{1}{L_f C_f}}{s^2 + s\frac{1}{C_f}\left(-\frac{\overline{I_{\text{inv}}}}{\overline{E_{\text{cf}}}} + \frac{\omega_{\text{r}}}{N_{\text{p}}\overline{E_{\text{cf}}}}K_{\text{D}}\right) + \frac{1}{L_f C_f}} \quad \cdots\cdots(18)$$

When the damping coefficient $\zeta$ of this secondary system coincides with a desired positive value $\zeta^*$, the following formula (19) holds.
[Mathematical 15]

$$\zeta^* = \frac{i_{\text{inv}}}{e_{\text{cf}}}\frac{1}{2}\sqrt{\frac{L_f}{C_f}} = \left(-\frac{\overline{I_{\text{inv}}}}{\overline{E_{\text{cf}}}} + \frac{\omega_{\text{r}}}{N_{\text{p}}\overline{E_{\text{cf}}}}K_{\text{D}}\right)\frac{1}{2}\sqrt{\frac{L_f}{C_f}} \quad \cdots\cdots(19)$$

When the proportional constant $K_{\text{D}}$ is arranged, the following formula (20) is obtained.
[Mathematical 16]

$$K_{\text{D}} = \frac{N_{\text{p}}}{\omega_{\text{r}}}\overline{I_{\text{inv}}} + 2\zeta^* N_{\text{p}}\sqrt{\frac{C_f}{L_f}}\frac{\overline{E_{\text{cf}}}}{\omega_{\text{r}}} \quad \cdots\cdots(20)$$

Ignoring losses inside the present device 10 and the induction motor 5, the DC component of the electric power $P_{\text{inv}}$ drawn from the DC side by the inverter 4 and the DC component of the mechanical output $\omega_{\text{r}}\tau/N_{\text{p}}$ of the induction motor 5 coincide with each other. That is, the following formula (21) holds.
[Mathematical 17]

$$\overline{E_{\text{cf}}}\,\overline{I_{\text{inv}}} = \frac{\omega_{\text{r}}\tau_0^*}{N_{\text{p}}} \quad \cdots\cdots(21)$$

When the proportional constant $K_{\text{D}}$ is obtained using the above formula (21), the following formula (22) is obtained.
[Mathematical 18]

$$K_{\text{D}} = \frac{N_{\text{p}}}{\omega_{\text{r}}}\frac{\overline{E_{\text{cf}}}\,\overline{I_{\text{inv}}}}{\overline{E_{\text{cf}}}} + 2\zeta^* N_{\text{p}}\sqrt{\frac{C_f}{L_f}}\frac{\overline{E_{\text{cf}}}}{\omega_{\text{r}}} = \frac{N_{\text{p}}}{\omega_{\text{r}}}\frac{\omega_{\text{r}}\tau_0^*}{N_{\text{p}}}\frac{1}{\overline{E_{\text{cf}}}} + 2\zeta^* N_{\text{p}}\sqrt{\frac{C_f}{L_f}}\frac{\overline{E_{\text{cf}}}}{\omega_{\text{r}}} = \frac{\tau_0^*}{\overline{E_{\text{cf}}}} + 2\zeta^* N_{\text{p}}\sqrt{\frac{C_f}{L_f}}\frac{\overline{E_{\text{cf}}}}{\omega_{\text{r}}} \quad \cdots(22)$$

When the variation amount $\tau_{\text{D}}$ of the output torque $\tau$ of the induction motor 5 by the damping control is obtained using the above formulas (15) and (22), the following formula (23) is obtained. The object of the present device 10A can be achieved by varying the output torque $\tau$ of the induction motor 5 according to the variation amount $\tau_{\text{D}}$ of the following formula (23).
[Mathematical 19]

$$\tau_{\text{D}} = K_{\text{D}}e_{\text{cf}} = \tau_0^*\frac{e_{\text{cf}}}{\overline{E_{\text{cf}}}} + 2\zeta^* N_{\text{p}}\sqrt{\frac{C_f}{L_f}}\frac{\overline{E_{\text{cf}}}}{\omega_{\text{r}}}e_{\text{cf}} \quad \cdots\cdots(23)$$

The first term of the above formula (23) is proportional to the torque command $\tau_0^*$ and the variable component $e_{\text{cf}}$ of the capacitor voltage $E_{\text{cf}}$. The second term of the above formula (23) is inversely proportional to the rotational speed $\omega_{\text{r}}$ of the induction motor 5. These are grounds for calculating the first manipulated variable $\tau_{\text{D1}}^*$ and the second manipulated variable $\tau_{\text{D2}}^*$ to be calculated by the damping control unit 11.

The first manipulated variable $\tau_{\text{D1}}^*$ is a value obtained by the first manipulated variable calculation unit 60 multiplying the torque command $\tau_0^*$ by the variable component $e_{\text{cf}}$ of the capacitor voltage $E_{\text{cf}}$ and dividing the result by the DC component (with overline) $\overline{E_{\text{cf}}}$ of the capacitor voltage $E_{\text{cf}}$. In other words, the first manipulated variable $\tau_{\text{D1}}^*$ is calculated according to the torque commands $\tau_0^*$ and $\tau_1^*$ or the current commands $I_{\text{1d}}^*$ and $I_{\text{1q}}^{**}$ and the variable component $e_{\text{cf}}$ of the capacitor voltage $E_{\text{cf}}$.

The second manipulated variable $\tau_{\text{D2}}^*$ is a value obtained by the second manipulated variable calculation unit 70 multiplying the DC component (with overline) $\overline{E_{\text{cf}}}$ of the capacitor voltage $E_{\text{cf}}$, the variable component $e_{\text{cf}}$ of the capacitor voltage $E_{cf}$, and the proportional constant 71 and dividing the product by the rotational speed $\omega r$ of the induction motor 5. In other words, the second manipulated variable $\tau^*_{D2}$ is calculated according to the information on the rotational speed $\omega_r$ of the electric motor 5 and the variable component $e_{cf}$ of the capacitor voltage $E_{cf}$.

An object of the present device 10A is to obtain a constant damping characteristic with respect to the oscillation of the capacitor voltage $E_{cf}$. Therefore, the present device 10A adds both the first manipulated variable and the second manipulated variable to the torque command $\tau^*_0$. As a result, the present device 10A is not affected by any of the variable factors such as the voltage of the DC overhead line 1, the torque command $\tau^*_0$ to the induction motor 5, and the rotational speed $\omega_r$ of the induction motor 5 with respect to the damping characteristic of the damping control.

That is, the present device 10A can obtain a constant damping characteristic that does not depend on the operating point of each of the conventional variable factors and can implement stable control. This is theoretically derived from the above formula (23). As described above, according to the present device 10A of the first embodiment, it is possible to obtain a constant damping characteristic with respect to the oscillation of the capacitor voltage $E_{cf}$ without depending on the operating point such as the voltage of the DC overhead line 1 and the torque and rotational speed $\omega_r$ output from the induction motor 5. Accordingly, in the electric railway to which the present device 10A is applied, since it is possible to reduce the inductive obstacle due to the return current, it is possible to reduce the size and weight of the reactor 2 and the capacitor 3 used for the filter circuit.

Furthermore, accordingly, when the present device 10A is equipped under the floor of the vehicle, the restriction on the mounting position due to the weight balance inside the vehicle and between vehicles is relaxed, and the degree of freedom in designing the entire vehicle is improved.

Second Embodiment

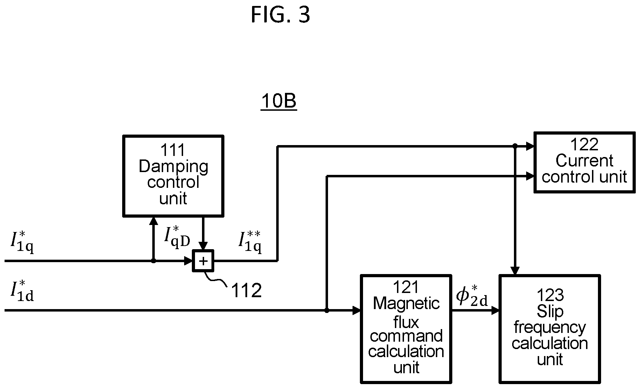

FIG. 3 is a functional block diagram showing the present device 10B according to a second embodiment and shows only differences from the present device 10 in FIG. 1. Therefore, the same reference numerals are used for common parts with the first embodiment in FIGS. 1 and 2, and the description thereof will be omitted. The present device 10A according to the first embodiment receives the torque command $\tau^*_0$ and the d-axis magnetic flux command $\Phi^*_{2d}$ from a host control system (not shown), whereas the present device 10B according to the second embodiment receives the d-axis current command $I^*_{1a}$ and the q-axis current command $I^*_{1q}$ from a host control system (not shown).

The damping control unit 11, the adder 12, the current command calculation unit 21, the current control unit 22, and the slip frequency calculation unit 23 in the first embodiment are replaced with a damping control unit 111, an adder 112, a magnetic flux command calculation unit 121, a current control unit 122, and a slip frequency calculation unit 123, respectively. The magnetic flux command calculation unit 121 calculates a d-axis magnetic flux command $\Phi^*_{2d}$ according to the following formula (24) from the d-axis current command $I^*_{1d}$ and the circuit constant of the induction motor 5.
[Mathematical 20]

$$\phi^*_{2d} = \frac{M}{1 + s\frac{L_2}{R_2}} I^*_{1d} \qquad \cdots\cdots(24)$$

The damping control unit 111 generates a damping manipulated variable $I^*_{qd}$ for suppressing the oscillation of the voltage $E_{cf}$ of the capacitor 3. The adder 112 adds the damping manipulated variable $I^*_{qD}$ output from the damping control unit to the q-axis current command $I^*_{1q}$ received from a host control system (not shown) by the present device 10A in order to generate the driving force necessary for accelerating/decelerating the vehicle, and calculates a q-axis current command $I^{**}_{1q}$ to be given to the vector control unit 20.

The current control unit 122 generates a d-axis voltage command $V_d^*$ and a q-axis voltage command $V_q^*$ according to the following formulas (25) and (26) so that the d-axis current $I_{1d}$ and the q-axis current $I_{1q}$ respectively match the d-axis current command $I^*_{1d}$ and the q-axis current command $I^{**}_{1q}$.

[Mathematical 21]

$$V_{\mathrm{d}}^* = \left(\omega_{\mathrm{acr}}\sigma L_1 + \frac{\omega_{\mathrm{acr}}R_1}{s}\right)(I_{1\mathrm{d}}^* - I_{1\mathrm{d}}) - \omega_{\mathrm{inv}}\sigma L_1 I_{1\mathrm{q}}^{**} \qquad \cdots\cdots(25)$$

$$V_{\mathrm{q}}^* = \left(\omega_{\mathrm{acr}}\sigma L_1 + \frac{\omega_{\mathrm{acr}}R_1}{s}\right)(I_{1\mathrm{q}}^{**} - I_{1\mathrm{q}}) + \omega_{\mathrm{inv}}\sigma L_1 I_{1\mathrm{d}}^* + \omega_{\mathrm{inv}}\frac{M}{L_2}\phi_{2\mathrm{d}}^* \qquad \cdots\cdots(26)$$

In order to match the direction of the d-axis with the direction of the rotor interlinkage magnetic flux of the induction motor 5, the slip frequency calculation unit 123 estimates a slip frequency that is a difference between the rotation angular velocity of the rotor interlinkage magnetic flux of the induction motor 5 and the angular velocity $\omega_{\mathrm{inv}}$ of the three-phase AC voltage. The slip frequency calculation unit 123 generates a slip frequency estimated value $\omega'_{\mathrm{s}}$ according to the following formula (27) from the d-axis magnetic flux command $\Phi^*_{2\mathrm{d}}$, the q-axis current command $I^{**}_{1\mathrm{q}}$, and the circuit constant of the induction motor 5.

[Mathematical 22]

$$\omega_{\mathrm{s}}^* = \frac{R_2 M I_{1\mathrm{q}}^{**}}{L_2 \phi_{2\mathrm{d}}^*} \qquad \cdots\cdots(27)$$

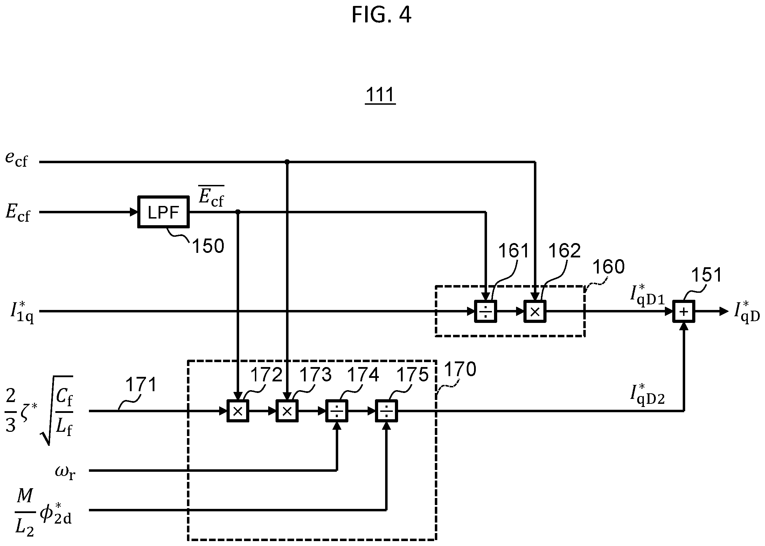

FIG. 4 is a detailed control circuit diagram of the damping control unit 111 in FIG. 3. The damping control unit 111 mainly includes a low-pass filter (LPF) 150 that extracts a DC component (with overline) $E_{\mathrm{cf}}$ of the capacitor voltage $E_{\mathrm{cf}}$, an adder 151, a first manipulated variable calculation unit 160, and a second manipulated variable calculation unit 170. A divider 161 and a multiplier 162 are provided.

The first manipulated variable calculation unit 160 calculates a value obtained by multiplying the q-axis current command $I^*_{1\mathrm{q}}$ by the variable component $e_{\mathrm{cf}}$ of the capacitor voltage $E_{\mathrm{cf}}$ and dividing the result by the DC component (with overline) $E_{\mathrm{cf}}$ of the capacitor voltage $E_{\mathrm{cf}}$. This value is the first manipulated variable $I^*_{\mathrm{qD1}}$. The second manipulated variable calculation unit 170 calculates a value obtained by multiplying the DC component (with overline) $E_{\mathrm{cf}}$ of the capacitor voltage $E_{\mathrm{cf}}$, the variable component $e_{\mathrm{cf}}$ of the capacitor voltage $E_{\mathrm{cf}}$, and the proportional constant 171, dividing the product by the rotational speed $\omega_{\mathrm{r}}$ of the induction motor 5, and further dividing the product by the d-axis magnetic flux command value $M/L_2\Phi^*_{2\mathrm{d}}$ converted to stator reference. This value is the second manipulated variable $I^*_{\mathrm{qD2}}$.

The second manipulated variable calculation unit 170 may calculate the second manipulated variable by performing division by the q-axis voltage command $V_{\mathrm{q}}^*$, instead of division by the rotational speed $\omega_{\mathrm{r}}$ of the induction motor 5 and the d-axis magnetic flux command value $M/L_2\Phi^*_{2\mathrm{d}}$ converted to stator reference. The damping control unit 111 calculates the damping manipulated variable $I^*_{\mathrm{qD}}$ by adding the first manipulated variable $I^*_{\mathrm{qD1}}$ and the second manipulated variable $I^*_{\mathrm{qD2}}$ by the adder 151.

In the drive control device, when the vector control of the induction motor 5 is established, it is generally known that the q-axis current $I_{1\mathrm{q}}$ and the output torque $\tau$ of the induction motor 5 have a proportional relationship. Therefore, also when the damping manipulated variable is added to the q-axis current command $I^*_{1\mathrm{q}}$ in the second embodiment, the same effect as that of the first embodiment can be obtained.

Third Embodiment

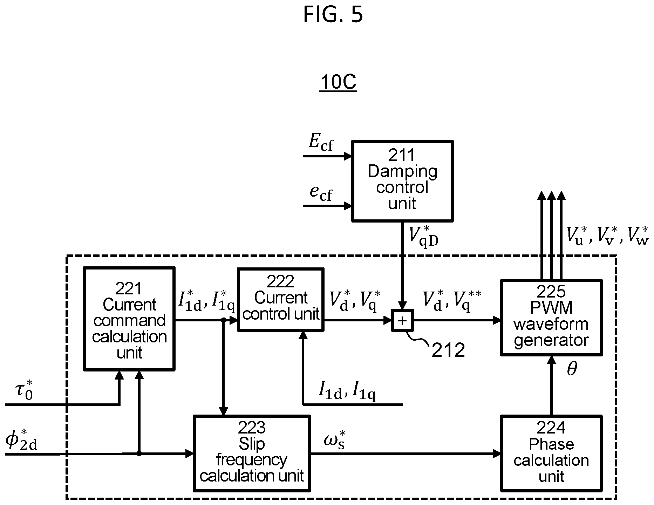

FIG. 5 is a functional block diagram schematically showing a vehicular driving control device (the present device) 10C according to a third embodiment of the present invention and shows only differences from the present device in FIG. 1. Therefore, the same reference numerals are used for common parts with the first embodiment in FIGS. 1 and 2, and the description thereof will be omitted. In the first embodiment, the damping manipulated variable is added to the torque command $\tau_0^*$, and the result is provided to the vector control unit 20, whereas in the third embodiment, the damping manipulated variable is added to the q-axis voltage command $V_{\mathrm{q}}^*$.

The present device 10A in the first embodiment in FIG. 1 includes a damping control unit 11, an adder 12, a current command calculation unit 21, a current control unit 22, a slip frequency calculation unit 23, a phase calculation unit 24, and a PWM waveform generator 25. As these are correspondingly replaced, the present device 10C in the third embodiment in FIG. 5 includes a damping control unit 211, an adder 212, a current command calculation unit 221, a current control unit 222, a slip frequency calculation unit 223, a phase calculation unit 224, and a PWM waveform generator 225.

The damping control unit 211 generates a damping manipulated variable $V_{qD}^*$ for suppressing the oscillation of the voltage $E_{cf}$ of the capacitor 3. The adder 212 adds the damping manipulated variable $V_{qD}^*$ to the q-axis voltage command $V_q^*$ output from the current control unit 222, calculates a q-axis voltage command $V_q^{**}$, and gives the q-axis voltage command $V_q^{**}$ to the PWM waveform generator 225.

The current control unit 122 generates a d-axis voltage command $V_d^*$ and a q-axis voltage command $V_q^*$ according to the above formulas (25) and (26) so that the d-axis current $I_{1d}$ and the q-axis current $I_{1q}$ respectively match the d-axis current command $I_{1d}^*$ and the q-axis current command $I_{1q}^{**}$. The current control unit 222, the slip frequency calculation unit 223, and the phase calculation unit 224 in FIG. 5 are similar to the current control unit 22, the slip frequency calculation unit 23, and the phase calculation unit 24 in FIG. 1, respectively. The PWM waveform generator 225 is similar to the PWM waveform generator 25 except that the q-axis voltage command $V_q^{**}$ is used instead of the q-axis voltage command $V_q^*$.

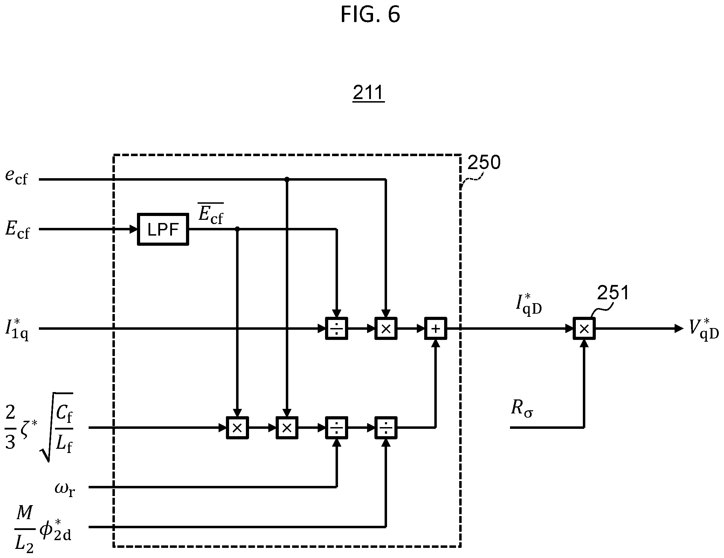

FIG. 6 is a detailed control circuit diagram of the damping control unit 211 in FIG. 5. The damping control unit 211 mainly includes a q-axis current manipulated variable calculation unit 250 and a multiplier 251. The q-axis current manipulated variable calculation unit 250 generates a q-axis current manipulated variable $I_{qD}^*$ by the same configuration as the damping control unit 111. The multiplier 251 multiplies the q-axis current manipulated variable $I_{qD}^*$ by the primary conversion resistor $R_\sigma$, obtained by substituting the circuit constant of the induction motor 5 into the following formula (28), to calculate the damping manipulated variable $V_{qD}^{**}$.

[Mathematical 23]

$$ R_\sigma = R_1 + \left(\frac{M}{L_2}\right)^2 R_2 \qquad\qquad \cdots\cdots(28) $$

The calculation of the damping manipulated variable $V_{qD}^*$ in the damping control unit 211 may be a simple multiplication by the multiplier 251 as in the third embodiment or may improve the transient responsiveness by, for example, adding the time derivative of the q-axis current manipulated variable $I_{qD}^*$.

In the third embodiment, the damping control unit 211 calculates the damping manipulated variable $V_{qD}^*$, but may output the damping manipulated variable to be added to the d-axis voltage command $V_d^*$ and give the damping manipulated variable to the PWM waveform generator 225 in consideration of electromagnetic interference of various amounts of the d-axis and the q-axis inside the induction motor 5.

In addition, in consideration of the influence of the damping control on the slip frequency of the induction motor 5, the damping manipulated variable to be added to the slip frequency estimated value $\omega_s^*$ may be output and given to the phase calculation unit 224, or the damping manipulated variable to be added to the phase angle $\theta$ of the three-phase AC voltage may be output and given to the PWM waveform generator 225. Furthermore, in consideration of the influence of the damping control on the d-axis current $I_{1d}$ and the q-axis current $I_{1q}$, a compensation amount to be added to the d-axis current $I_{1d}$ and the q-axis current $I_{1q}$ may be calculated in the damping control unit 211 so that the operation of the current control unit 222 is not interfered, and the compensation amount may be given to the current control unit 222.

Even when the damping manipulated variable is added to the q-axis voltage command $V_q^*$ as in the third embodiment, if the change amount of the q-axis current $I_{1q}$ caused by the damping manipulated variable $V_{qD}^*$ matches the q-axis current manipulated variable $I_{qD}^*$, the same effect as in the first embodiment can be obtained by the same principle as in the second embodiment.

In the first embodiment and the second embodiment, when the response angular frequency $\omega_{acr}$ of the current control unit 22 and the current control unit 122 is not sufficiently higher than the resonance angular frequency $\omega_n$ of the filter circuit, the response delay of the output torque $\tau$ of the induction motor 5 cannot be ignored, and it may be difficult to secure control stability. In such a case, the third embodiment is particularly useful because damping control is performed without depending on the response angular frequency $\omega_{acr}$ of the current control unit 222.

Fourth Embodiment

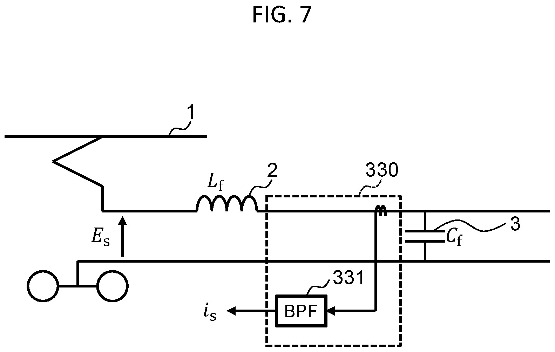

FIG. 7 is a schematic circuit diagram of a variation detection unit 330 according to a fourth embodiment of the present invention and shows only differences from the variation detection unit 30 of the present device 10A in FIG. 1. Therefore, the same reference numerals are used for common parts with the first embodiment in FIGS. 1 and 2, and the description thereof will be omitted. While the variable component $e_{cf}$ of the capacitor voltage $E_{cf}$ is extracted from among the electrical quantity of the filter circuit in the first embodiment, the variable component $i_s$ of the reactor current $I_s$ is extracted from among the electrical quantity of the filter circuit in the fourth embodiment.

The variation detection unit 30 in the first embodiment is replaced with a variation detection unit 330. The variation detection unit 330 mainly includes a band-pass filter (BPF) 331 that extracts a variable component $i_s$ of the reactor current $I_s$. The band-pass filter 331 may have characteristics similar to those of the band-pass filter 31, or may have characteristics of converting the amplitude and phase of the variable component $i_s$ of the reactor current into values corresponding to the variable component $e_{cf}$ of the capacitor voltage $E_{cf}$.

Fifth Embodiment

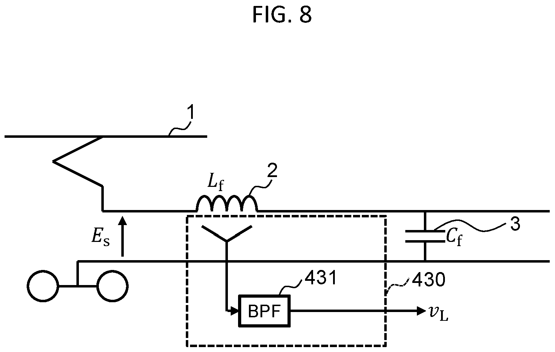

FIG. 8 is a schematic circuit diagram of a variation detection unit 430 according to a fifth embodiment of the present invention and shows only differences from the variation detection unit 30 of the present device 10A in FIG. 1. Therefore, the same reference numerals are used for common parts with the first embodiment shown in FIGS. 1 and 2, and the description thereof will be omitted. While the variable component $e_{cf}$ of the capacitor voltage $E_{cf}$ is extracted from among the electrical quantity of the filter circuit in the first embodiment, the variable component $v_L$ of the reactor voltage $V_L$ is extracted from among the electrical quantity of the filter circuit in the fifth embodiment.

The variation detection unit 30 in the first embodiment is replaced with a variation detection unit 430. The variation detection unit 430 mainly includes a band-pass filter (BPF) 431 that extracts a variable component $v_L$ of the reactor voltage $V_L$. The band-pass filter 431 may have characteristics similar to those of the band-pass filter 31, or may have characteristics of converting the amplitude and phase of the variable component $v_L$ of the reactor voltage into values corresponding to the variable component $e_{cf}$ of the capacitor voltage $E_{cf}$.

Sixth Embodiment

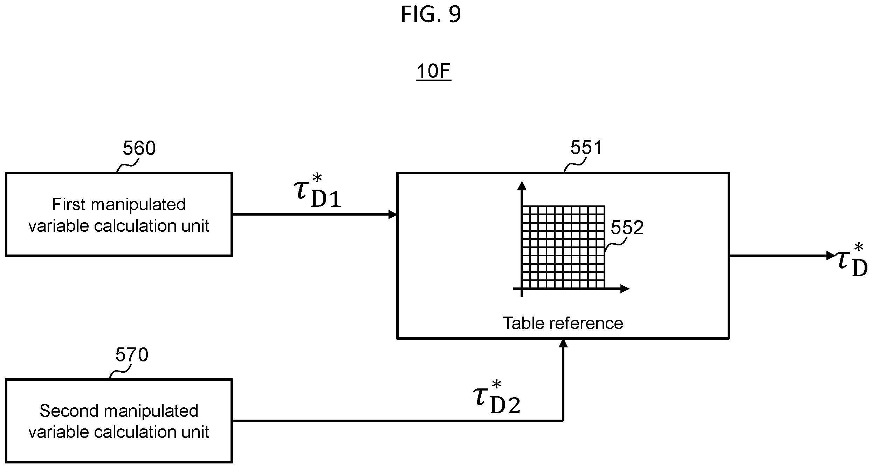

FIG. 9 is a diagram showing only a portion different from that of the present device 10A of the first embodiment shown in FIG. 1 among the drive control device (present device) 10F according to the sixth embodiment. Description of parts common to the first embodiment will be omitted. The present device 10A of the first embodiment calculates the damping manipulated variable $\tau^*_D$ by adding the first manipulated variable $\tau^*_{D1}$ and the second manipulated variable $\tau^*_{D2}$ by the adder 51. On the other hand, the present device 10F of the sixth embodiment acquires the damping manipulated variable $\tau^*_D$ by referring to a table calculated in advance according to the first manipulated variable $\tau^*_{D1}$ and the second manipulated variable $\tau^*_{D2}$.

The present device 10F of the sixth embodiment replaces the adder 51 in the first embodiment shown in FIG. 1 with a table reference 551. The table reference 551 refers to the table data 552 according to the respective values of the first manipulated variable $\tau^*_{D1}$ and the second manipulated variable $\tau^*_{D2}$. The present device 10F calculates the damping manipulated variable $\tau^*_D$ to be output based on the reference value. The table data 552 may have any of a characteristic of simply adding the first manipulated variable $\tau^*_{D1}$ and the second manipulated variable, and a characteristic of limiting the value of the damping manipulated variable not to exceed a predetermined upper limit value or lower limit value.

In addition, a plurality of types of table data 552 may be prepared and switched according to a section in which the vehicle travels. Alternatively, when a plurality of vehicles are connected and operated, a plurality of types of table data 552 may be switched according to the number and types of vehicles to be connected. The table reference 551 may perform simple linear interpolation processing on the table data 552, may perform interpolation processing such as higher order polynomial interpolation, or may not perform interpolation processing at all.

The present device 10 can be summarized as follows.

[1] The present device 10 is a vehicular driving control device 10 that drives the electric motor 5 by controlling the electric power conversion circuit 4 connected to the DC power source 1 by the vector control unit 20. The present device 10 includes a filter circuit, a variation detection unit 30, 330, 430, a torque control unit (not shown), an electric power conversion circuit 4, and a damping control unit 11, 111, 211.

The filter circuit is interposed between the DC power source 1 and the DC side of the electric power conversion circuit 4. The filter circuit includes a reactor 2 and a capacitor 3, and prevents outflow of harmonics. The variation detection unit 30, 330, 430 detects a variable component $e_{cf}$ of the electrical quantity of the filter circuit. A torque control unit (not shown) is provided as a main function of the vector control unit 20 in FIG. 1. The torque control unit generates voltage commands $V^*_U$, $V^*_V$, and $V^*_W$ to be applied to the electric motor 5 according to the torque commands $\tau_0^*$ and $\tau_1^*$ or the current commands $I'_{1d}$ and $I^{**}_{1q}$.

The electric power conversion circuit 4 converts the electric power of the DC power source 1 into three-phase AC according to the voltage commands $V^*_U$, $V^*_V$, and $V^*_W$, forms a desired rotating magnetic field, and supplies the rotating magnetic field to the electric motor 5. As shown in the above formula (23), the damping control unit 11, 111, 211 suppresses the variable component $e_{cf}$ by operating the electric power conversion circuit 4 according to the damping manipulated variable $\tau^*_D$ of the sum of the first manipulated variable $\tau^*_{D1}$ and the second manipulated variable $\tau^*_{D2}$.

As indicated by $\tau^*_{D1}$ before the addition processing 51 in FIG. 2, the first manipulated variable $\tau^*_{D1}$ is calculated according to the torque commands $\tau_0^*$ and $\tau_1^*$ or the current commands $I^*_{1d}$ and $I^{**}_{1q}$ and the variable component $e_{cf}$. As indicated by $\tau^*_{D2}$ before the addition processing 51 in FIG. 2, the second manipulated variable $\tau^*_{D2}$ is calculated according to the rotational speed information of the electric motor 5 and the variable component $e_{cf}$.

The first term of the above formula (23) is proportional to the torque command $\tau^*_0$ and the variable component $e_{cf}$ of the capacitor voltage $E_{cf}$, and the second term of the above formula (23) is inversely proportional to the rotational speed $\omega_r$ of the induction motor 5. These are the first manipulated variable $\tau^*_{D1}$ and the second manipulated variable $\tau^*_{D2}$ to be calculated by the damping control unit 11.

That is, by adding both the first manipulated variable $\tau^*_{D1}$ and the second manipulated variable $\tau^*_{D2}$ to the torque command $\tau^*_0$, the present device 10 can implement damping control that provides constant damping to the oscillation of the capacitor voltage $E_{cf}$. The constant damping provided by the damping control does not depend on the operating point such as the voltage of the DC overhead line 1, and the torque command $\tau^*_0$ and the rotational speed $\omega_r$ of the induction motor 5. As a result, the present device 10 can implement stable damping control regardless of changes in the driving state of the vehicle and the voltage environment.

[2] In the above [1], a numerical value generated by at least any one of the following only needs to be used as the damping manipulated variable $\tau^*_D$. As shown in FIG. 9, the first is a reference value acquired according to the first manipulated variable $\tau^*_{D1}$ and the second manipulated variable $\tau^*_{D2}$ from the table data 552 calculated in advance. The second is an addition value of the first manipulated variable $\tau^*_{D1}$ and the second manipulated variable $\tau^*_{D2}$ as theoretically described based on the above formula (23).

The present device 10 can easily implement ideal damping control by executing a program stored in a memory of a computer. It should be noted that the computer may be a one-chip microcomputer or a personal computer, and may also use a computer for other applications. In addition, the table data 552 stored in the memory is preferably updatable.

[3] In the above [1], the electrical quantity only needs to be at least any one of the following three types. The first is the basic form shown in FIGS. 1 and 2, and the electrical quantity is the voltage $E_{cf}$ of the capacitor 3. The second electrical quantity is a current flowing through the reactor 2 as shown in FIG. 7. The third electrical quantity is a voltage across the reactor 2 as shown in FIG. 8. In the present device 10 as described above, since the variation detection unit 30, 330, 430 detects, at the shortest wiring distance, the oscillation phenomenon of the capacitor voltage $E_{cf}$ from the current of the reactor 2 which is the cause of the oscillation phenomenon of the capacitor voltage $E_{cf}$, the voltage across the reactor 2, or the voltage $E_{cf}$ of the capacitor 3, more accurate damping control can be easily implemented.

[4] In the above [1], if the first manipulated variable $\tau^*_{D1}$ is at least any one of the following two types, the first manipulated variable $\tau^*_{D1}$ acts in a direction of suppressing the variable component $e_{cf}$. First, the first manipulated variable $\tau^*_{D1}$ is made proportional to the torque commands $\tau_0^*$ and $\tau_1^*$ or the current commands $I^*_{1d}$ and $I^{**}_{1q}$ and the variable component $e_{cf}$. As a result, the vector control unit 20 can perform damping control in a direction of suppressing the magnitude of the variation cause, opposed to the magnitude of the variation cause. Second, as shown in the division processing 61 in FIG. 2, the first manipulated variable $\tau^*_{D1}$ is made inversely proportional to the DC component (with overline) $E_{cf}$ of the voltage $E_{cf}$ of the capacitor 3. As a result, the present device 10 can perform damping control in a direction of suppressing the oscillation phenomenon itself of the capacitor voltage $E_{cf}$.

[5] In the above [1], as shown in the multiplication processing 72 in FIG. 2, the second manipulated variable $\tau^*_{D2}$ only needs to be at least any one of the following three types. The first is made inversely proportional to the rotational speed information of the electric motor 5 also including a sensorless motor and is made proportional to the variable component $e_{cf}$. The second is made inversely proportional to the voltage commands $V^*_U$, $V^*_V$, and $V^*_W$, and is made proportional to the variable component $e_{cf}$. The third is made proportional to the DC component (with overline) $E_{cf}$ of the voltage $E_{cf}$ of the capacitor 3. In the present device 10 as described above, as the rotational speed is lower, the voltage commands $V^*_U$, $V^*_V$, and $V^*_W$ are smaller, and the oscillation and the variation cause of the capacitor voltage $E_{cf}$ are larger, the vector control unit 20 exhibits a larger influence of the variation. Therefore, damping control can be performed in a direction of suppressing the magnitude as opposed to the magnitude thereof.

[6] In the above [1], the second manipulated variable calculation unit 70 may always set the proportional constant 71 used to calculate the second manipulated variable $\tau^*_{D2}$ to a constant value or may switch according to such a control delay in consideration of the operation delay of the inverter 4 and the vector control unit 20. The present device 10 described above can perform quick damping control with less control delay with respect to the oscillation of the capacitor voltage $E_{cf}$.

[7] In the above [1] to [6], the electric motor 5 only needs to be the AC electric motor 5, and the electric power conversion circuit 4 only needs to be the inverter 4 that converts the voltage of the DC power source 1 into a three-phase AC voltage. Furthermore, the torque control unit only needs to be a vector control system that generates the voltage commands $V^*_U$, $V^*_V$, and $V^*_W$ so that the output torque $\tau$ of the electric motor 5 or the current flowing through the electric motor 5 matches the torque commands $\tau_0^*$ and $\tau_1^*$ or the current commands $I^*_{1d}$ and $I^{**}_{1q}$. The present device 10 has good suitability, compatibility, and maintainability with conventional resources and conventional technologies, and thus is highly practical and easily maintains high performance.

Reference Signs List

1 DC overhead line (DC power source)
2 reactor
3 capacitor
4 inverter
5 induction motor 5
10 vehicular driving control device (the present device)
11, 111, 211 damping control unit
12, 112, 212 adder
20 vector control unit
21, 221 current command calculation unit
121 magnetic flux command calculation unit
22,122, 222 current control unit
23,123, 223 slip frequency calculation unit
24, 224 phase calculation unit
25, 225 PWM waveform generator
26 coordinate transformation unit
30,330, 430 variation detection unit
31, 331, 431 band-pass filter
50, 150 low-pass filter
250 q-axis current manipulated variable calculation unit
51, 151 adder (addition processing)
251 multiplier
60, 160, 560 first manipulated variable calculation unit
61, 161 divider
62, 162 multiplier
70, 170, 570 second manipulated variable calculation unit
71, 171 proportional constant
72, 73, 172, 173 multiplier
551 table reference
552 table data
$E_{cf}$ capacitor voltage
(with overline) $E_{cf}$ DC component (of capacitor voltage $E_{cf}$)
$e_{cf}$ variable component (of capacitor voltage $E_{cf}$)
$e_s$ variable component (of voltage of DC overhead line 1)
$I^*_{1d}$ d-axis current command
$I^*_{1q}$ q-axis current command
Iu, Iv, Iw phase current
$K_D$ proportional constant (between capacitor voltage $E_{cf}$ and its variable component $e_{cf}$)
$L_1$, $L_2$ rotor self-inductance
M mutual inductance
$M/L_2\Phi^*_{2d}$ d-axis magnetic flux command value
$N_p$ the number of pole pairs
$P_{inv}$ electric power (drawn from DC side by inverter 4)
$R_1R_2$ rotor resistance
s Laplace operator
$\tau$ output torque
$\tau_0^*$, $\tau_1^*$ torque command
$\tau_D^*$ damping manipulated variable
$\tau^*_{D1}$ first manipulated variable
$\tau^*_{D2}$ second manipulated variable
$V^*_U$, $V^*_V$, $V^*_W$ voltage command
$\Phi^*_{2d}$ d-axis magnetic flux command
$\zeta$ damping coefficient

$\sigma$ leakage coefficient

$\omega_{acr}$ response angular frequency (of current control unit 22)

$\omega_{inv}$ angular velocity (output from inverter 4)

$\omega_n$ resonance angular frequency (of filter circuit)

$\omega_r$ rotational speed

$\omega_r \tau / N_p$ mechanical output

$\omega^*_s$ slip frequency estimated value

**Claims**

1. A vehicular driving control device comprising:

   an electric power conversion circuit connected to a DC power source, the electric power conversion circuit being configured to supply electric power of the DC power source to an electric motor according to a voltage command;
   a filter circuit interposed between a DC side of the electric power conversion circuit and the DC power source, the filter circuit including a reactor and a capacitor;
   a variation detection unit configured to detect a variable component of an electrical quantity related to the filter circuit;
   a torque control unit configured to generate the voltage command to be applied to the electric motor according to a torque command or a current command; and
   a damping control unit configured to operate the electric power conversion circuit to suppress the variable component,
   wherein the damping control unit operates the electric power conversion circuit according to a damping manipulated variable based on

   a first manipulated variable calculated according to the torque command or the current command and the variable component, and
   a second manipulated variable calculated according to rotational speed information of the electric motor and the variable component.

2. The vehicular driving control device according to claim 1, wherein the damping manipulated variable is at least any one of

   a reference value acquired from table data calculated in advance according to the first manipulated variable and the second manipulated variable, and
   an addition value of the first manipulated variable and the second manipulated variable.

3. The vehicular driving control device according to claim 1 or 2, wherein the electrical quantity is at least any one of a voltage of the capacitor, a current flowing through the reactor, and a voltage across the reactor.

4. The vehicular driving control device according to any one of claims 1 to 3, wherein the first manipulated variable is proportional to the torque command or the current command and the variable component, or is inversely proportional to a DC component of the voltage of the capacitor.

5. The vehicular driving control device according to any one of claims 1 to 4, wherein the second manipulated variable is at least any one of

   a case of being inversely proportional to rotational speed information of the electric motor and proportional to the variable component,
   a case of being inversely proportional to the voltage command and proportional to the variable component, and
   a case of being proportional to the DC component of the voltage of the capacitor.

6. The vehicular driving control device according to any one of claims 1 to 5, wherein a proportional constant used to calculate the second manipulated variable is switched according to a control delay of the torque control unit.

7. The vehicular driving control device according to any one of claims 1 to 6, wherein the electric motor is an AC electric motor, the electric power conversion circuit is an inverter that converts a voltage of the DC power source into a three-phase AC voltage, and the torque control unit is a vector control system that generates the voltage command so that output torque of the electric motor or a current flowing through the electric motor matches the torque command or the current command.

8. A vehicular driving control method comprising:

using a filter circuit including a reactor and a capacitor;
interposing the filter circuit between a DC side of an electric power conversion circuit linked to a DC power source and the DC power source to block an outflow of harmonics;
supplying electric power of the DC power source to an electric motor according to a voltage command by the electric power conversion circuit;
detecting a variable component of an electrical quantity related to the filter circuit by a variation detection unit;
generating the voltage command to be applied to the electric motor according to a torque command or a current command by a torque control unit;
operating the electric power conversion circuit to suppress the variable component by a damping control unit; and driving the electric motor,
wherein the damping control unit operates the electric power conversion circuit according to a damping manipulated variable based on

a first manipulated variable calculated according to the torque command or the current command and the variable component, and
a second manipulated variable calculated according to rotational speed information of the electric motor and the variable component.

9. The vehicular driving control method according to claim 8, wherein the damping control unit controls the electric power conversion circuit using, for the damping manipulated variable, at least any one of

a reference value acquired from table data calculated in advance according to the first manipulated variable and the second manipulated variable, and
an addition value of the first manipulated variable and the second manipulated variable.

10. The vehicular driving control method according to claim 8 or 9, wherein the electrical quantity is at least any one of a voltage of the capacitor, a current flowing through the reactor, and a voltage across the reactor.

11. The vehicular driving control method according to any one of claims 8 to 10, wherein the first manipulated variable is proportional to the torque command or the current command and the variable component, or is inversely proportional to a DC component of the voltage of the capacitor.

12. The vehicular driving control method according to any one of claims 8 to 11, wherein the second manipulated variable is at least any one of

a case of being inversely proportional to rotational speed information of the electric motor and proportional to the variable component,
a case of being inversely proportional to the voltage command and proportional to the variable component, and
a case of being proportional to the DC component of the voltage of the capacitor.

13. The vehicular driving control method according to any one of claims 8 to 12, wherein a proportional constant used to calculate the second manipulated variable is switched according to a control delay of the torque control unit.

14. The vehicular driving control method according to any one of claims 8 to 13, wherein the electric motor uses an AC electric motor, the electric power conversion circuit uses an inverter that converts a voltage of the DC power source into a three-phase AC voltage, and the torque control unit is a vector control system that generates the voltage command so that output torque of the electric motor or a current flowing through the electric motor matches the torque command or the current command.

FIG. 1

FIG. 2

EP 4 503 427 A1

FIG. 3

10B

FIG. 4

FIG. 5

10C

FIG. 6

EP 4 503 427 A1

FIG. 7

FIG. 8

FIG. 9

10F

Table reference

## INTERNATIONAL SEARCH REPORT

| International application No. |
| --- |
| **PCT/JP2022/048660** |

**A.    CLASSIFICATION OF SUBJECT MATTER**

*H02P 21/05*(2006.01)i; *B60L 9/18*(2006.01)i; *H02M 7/48*(2007.01)i
FI:    H02P21/05; B60L9/18 A; H02M7/48 E

According to International Patent Classification (IPC) or to both national classification and IPC

**B.    FIELDS SEARCHED**

Minimum documentation searched (classification system followed by classification symbols)

H02P21/05; B60L9/18; H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2011/039794 A1 (MITSUBISHI ELECTRIC CORP.) 07 April 2011 (2011-04-07) paragraphs [0001]-[0107], fig. 1-8 | 1-14 |
| A | JP 2010-161925 A (HITACHI, LTD.) 22 July 2010 (2010-07-22) paragraphs [0001]-[0047], fig. 1-5 | 1-14 |
| A | JP 2007-151392 A (KABUSHIKI KAISHA TOSHIBA) 14 June 2007 (2007-06-14) paragraphs [0001]-[0164], fig. 1-25 | 1-14 |

☐ Further documents are listed in the continuation of Box C.          ☑ See patent family annex.

| | |
| --- | --- |
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **02 February 2023** | **07 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/048660**

| Patent document cited in search report | | | Publication date (day/month/year) | Patent family member(s) | | | Publication date (day/month/year) |
|---|---|---|---|---|---|---|---|
| WO | 2011/039794 | A1 | 07 April 2011 | US | 2012/0147638 | A1 | |
| | | | | paragraphs [0001]-[0101], fig. 1-6, 9, 10 | | | |
| | | | | EP | 2472710 | A1 | |
| | | | | CN | 102511122 | A | |
| JP | 2010-161925 | A | 22 July 2010 | (Family: none) | | | |
| JP | 2007-151392 | A | 14 June 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008026249 A